# EUROPEAN PATENT APPLICATION

(11) **EP 4 372 609 A1**
(43) Date of publication of application: **22.05.2024**
(21) Application number: 22306710.9
(22) Date of filing: 21.11.2022
(51) Int. Cl.: G06K 19/077

(54) **LED OR OLED CAPACITANCE ANTENNA FOR INDUCTIVE CARDS**

(71) Applicant: THALES DIS FRANCE SAS, 92190 Meudon (FR)
(72) Inventor: BUYUKKALENDER, Arek, 13190 ALLAUCH (FR); MERIDIANO, Jean-Luc, 83170 TOURVES (FR); COLOMBARD, Claude, 84120 PERTUIS (FR); MILANINI, Stéphanie, 83210 SOLLIES-PONT (FR)
(74) Representative: Castelo, Jérôme

(57) **Abstract**

A data carrier (1) for a secure article (100) comprises at least one electronic module (2) comprising at least one module antenna (3), at least one booster antenna (4), and at least one light emitting device (5). The electronic module (2) is configured to communicate with a remote device being arranged remotely from the data carrier (1) via the module antenna (3). The booster antenna (4) is configured to communicate with the remote device in a wireless manner. The booster antenna (4) is further configured to power the module antenna (3) upon its communication with the remote device. The booster antenna (4) is configured to power the light emitting device (5) upon its communication with the remote device.

## Description

### TECHNICAL FIELD

The present invention relates to a data carrier according to claim 1, a secure article comprising or consisting of such a data carrier according to claim 14, and to a method of producing a data carrier according to claim 15.

### PRIOR ART

Data carriers such as smart cards or electronic tags for passports, as payment cards for payment transactions, etc. are well-known in the art. Such data carriers can provide an identification or an authentication such as a light emission indicating a successful payment transaction to the owner of the data carrier. For this purpose, a light-emitting device such as an LED module can be provided, which emits light when the payment transaction is successful. In order for the light emitting device to emit light, it needs to be powered.

To this end it is known to provide an LED antenna that powers the LED module. Disadvantages associated with such an LED antenna are the high number of turns required on the LED antenna in order to power the LED module, a big energy consumption, and perturbations of other antennas in the data carrier such as the module antenna of an electronic module. Furthermore, such an LED antenna is associated with manufacturing costs and the LED lightning is weak.

### SUMMARY OF THE INVENTION

It is an object of the present invention to provide a data carrier comprising a light emitting device that is of a simple design and enables enhanced lighting capabilities.

This object is achieved with a data carrier according to claim 1. In particular, a data carrier for a secure article is provided, wherein the data carrier comprises at least one electronic module comprising at least one module antenna, at least one booster antenna, and at least one light emitting device. In other words, the electronic module comprises an antenna which is preferably distinct from the booster antenna. The electronic module is configured to communicate with a remote device being arranged remotely from the data carrier via the module antenna. The booster antenna is configured to communicate with the remote device in a wireless manner. The booster antenna is further configured to power the module antenna upon its communication with the remote device. The booster antenna is configured to power the light emitting device upon its communication with the remote device.

The communication between the electronic module and the remote device and/or between the booster antenna and the remote device preferably is a wireless communication via electromagnetic radiation, in particular via radio waves.

Thus, the remote device preferably is configured to emit electromagnetic radiation, in particular radio waves. The remote device particularly preferably corresponds to an RF reader as it is known in the field of the art.

As such, it is preferred that the booster antenna is a radio-frequency (RF) antenna and/or that the electronic module comprising the module antenna preferably is an RF module. Said RF module can also be referred to as an RF transponder.

The electronic module particularly preferably is a commercially available electronic module. The electronic module preferably comprises an internal microprocessor chip, the module antenna, and optionally one or more contact pads. The contact pads may be conventional contact pads such as contact pads being used in contact-type smart cards and being configured to establish an electrical contact with a remoted device being a contact card reader, for instance. Such a smart card is commonly referred to as dual interface smart card. However, it is likewise conceivable that no contact pads are present and that the data carrier is a contactless smart card.

As mentioned earlier, the electronic module is configured to communicate with a remote device being arranged remotely from the data carrier via the module antenna. In other words, the electronic module is preferably configured to communicate with the remote device in a wireless manner.

Such wireless communications are typically associated with a functional distance. That is, the wireless communication between the module antenna and the remote device is limited to a certain distance. At larger distances, the wireless communication is poor or no longer possible. The booster antenna being configured to power the module antenna means that the booster antenna enhances or improves the communication between the module antenna and the remote device, i.e. the booster antenna powers up the module antenna.

For example, in the event of the electronic module being an RF module or RF transponder and the booster antenna being an RF booster antenna, the booster antenna is preferably configured to capture radio frequency energy generated by the remote device and to communicate with said remote device. As will be explained in greater detail below, the booster antenna is preferably arranged and configured such as to couple, preferably inductively couple, with the module antenna, thereby providing signals from the booster antenna to the electronic chip of the electronic module, while at the same time keeping the electronic chip electrically isolated from the booster antenna. Consequently, a possible read distance between the remote device and the electronic module is substantially increased by the booster antenna.

The booster antenna preferably forms an antenna circuit, particularly preferably a radio-frequency antenna circuit.

The booster antenna forming an antenna circuit preferably forms a resonant circuit. A resonance frequency of said resonant circuit is preferably matching or tuned to match a resonance frequency of the module antenna of the electronic module and of the light emitting device.

However, it should be noted that the present invention is not restricted to electromagnetic radiation in the radio frequency range. Instead, various frequency ranges are likewise conceivable and depend on the electronic module, in particular on the microprocessor chip characteristics used in the electronic module.

The booster antenna being configured to power the light emitting device upon its communication with the remote device means that the light emitting device emits light when the booster antenna communicates with the remote device. In other words, when the booster antenna communicates with the remote device, the booster antenna powers the light emitting device such that the light emitting device emits light. Said light emission of the light emitting device can serve the purpose of indicating an operation state of the data carrier. For instance, the light emission can indicate the owner of the data carrier that a communication between a remote device in the form of a payment terminal and a data carrier in the form of a smart card is established and that a payment transaction is being executed. Other purposes of the light emitting device are an indication of a condition to the user such as the proximity of a communication device, in particular of a 13.56 MHz communication device, the indication to the owner in the event of an attack on his data carrier such as smart card, the visual indication of the power of an electromagnetic field since the intensity of the light emitting device preferably depends on the level of fields disappointed by the data carrier, the lighting of an area or of a security element such as a logo being provided on and/or in the data carrier or the secure article comprising or consisting of the data carrier, see also below, etc.

Hence, the booster antenna serves a dual purpose. Namely, on the one side it serves to power up the module antenna of the electronic module. On the other side, it also serves the purpose of powering the light emitting device.

Hence, the present invention is based on the insight that the light emitting device can be powered by the booster antenna at the same time as the booster antenna powers up the module antenna. In other words, the data carrier according to the present invention is capable of powering the light emitting device without any other energy than energy from the remote device such as the reader field. As such, the energy used by the light emitting device does not affect the product remote behaviour, any chip perturbations of the electronic module being dispensed with. Furthermore, the design of the data carrier and its manufacturing is simplified since additional semiconductors or antennas needed in the prior art for powering the light emitting device are no longer needed.

To this end, it is particularly preferred that the data carrier comprises exactly one booster antenna.

The light emitting device preferably corresponds to a LED module or to an OLED module. The light emitting device is preferably configured to emit light in the ultraviolet region and/or the visible region and/or the infrared region of the electromagnetic spectrum. The LED module or the OLED (organic LED) module preferably are commercially available modules as they are known in the state or the art.

The booster antenna is preferably connected to the light emitting device. That is, the booster antenna is preferably physically connected to the light emitting device. For instance, the booster antenna and the light emitting device can be connected to one another via thermocompression, tin soldering, conductive glue, or conductive adhesives, or other type of connections as it is well-known in the field of the art.

The booster antenna preferably comprises two end portions, and wherein the booster antenna is connected to the light emitting device at the two end portions.

It is preferred that the light emitting device is connected to end portions of the booster antenna. In this regard it is noted that the end portions of the booster antenna can be arranged anywhere in the data carrier. For instance, these end portions can be inside or outside of an antenna area in order to illuminate a specific logo area, for instance.

The booster antenna preferably terminates in two free ends. One of these free ends is arranged in one of the end portions of the booster antenna. To this end it is conceivable that the free ends of the booster antenna are connected to the light emitting device. However, it is likewise conceivable that the free ends of the booster antenna are not connected to the light emitting device but protruding from the light emitting device. These protruding parts can be seen as extremities of the booster antenna.

The booster antenna preferably is electrically conductive. It is furthermore preferred that the booster antenna has the form of a track or wire. For instance, the booster antenna can be a copper wire.

A length of the booster antenna is preferably used to tune a resonance frequency of the booster antenna. In fact, the shorter the length of the booster antenna, in particular the length of the wire used for the booster antenna, the higher the resonance frequency of the booster antenna. The larger the length of the booster antenna, in particular the length of the wire used for the booster antenna, the lower the resonance frequency of the booster antenna. The resonance frequency of the booster antenna is the frequency where the booster antenna exhibits a maximal energy transmission. That is, a resonant system such as the resonant circuit formed by the booster antenna can accumulate energy if it is applied in periodic form and close to a frequency called resonance frequency. This resonance frequency of the booster antenna and thus the lengths of the wire used for the booster antenna is preferably chosen such as to match the (resonance) frequency of the module antenna. In other words, a behaviour of the electronic chip of the electronic module is preferably characterized as a function of a resonance frequency tuning of the booster antenna and thus of the length of the booster antenna and of its extremities.

The resonance frequency of the booster antenna depends on a size of the booster antenna, of the pitch between the wires constituting the booster antenna, the wire diameter, the number of turns and lengths of the extremities. Hence, by modifying one or more of these quantities, the resonance frequency of the booster antenna can be selectively adjusted.

The booster antenna preferably comprises at least a first spiral with a plurality of first turns and a second spiral with a plurality of second turns, and wherein the second spiral extends between the first turns of the first spiral. That is, the booster antenna preferably forms at least two spirals.

A number of turns of the first spiral preferably equals to or is larger than a number of turns of the second spiral. A number of turns of the first spiral preferably is 5 or less, but can likewise be higher is a size of the booster antenna is reduced. A number of turns of the second spiral preferably is 5 or less, but can be higher if a size of the booster antenna is reduced. A spacing between the first turns of the first spiral preferably is 400 micrometer or less, but can be larger when compensating the number of turns accordingly. A spacing between the second turns of the second spiral preferably is 400 micrometer or less, but can be larger when compensating the number of turns accordingly. An intra-spacing between a first turn of the first spiral and a second turn of the second spiral preferably is 200 micrometer or less, but can be larger when compensating the number of turns accordingly.

The first spiral and the second spiral in each case preferably comprises a first end portion and a second end portion, and wherein the first end portion of the first spiral is connected to the light emitting device, and/or wherein the second end portion of the first spiral is connected to the first end portion of the second spiral, and/or wherein the second end portion of the second spiral is connected to the light emitting device.

That is, the first spiral of the booster antenna preferably defines two end portions, and wherein the second spiral of the booster antenna extends from one of the end portions of the first spiral and furthermore extends along and between the turns of the first spiral.

The other end portion of the first spiral is preferably connected to the light emitting device as mentioned above. The second spiral preferably extends from the first spiral at one of its end portions, wherein the other of its end portions is preferably connected to the light emitting device.

To this end it is particularly preferred that the first spiral and the second spiral constitute a single-piece component, i.e. form part of a single-piece booster antenna. In other words, the end portions of the spirals are not structural or physical end portions such as free ends of separate wires.

The first turns are preferably wound in a first direction and the second turns are preferably wound in a second direction, and wherein the first direction and the second direction equal one another.

Alternatively, the first direction of winding the first turns and the second direction of winding the second turns are inverted from one another.

It is preferred that the first spiral is formed by turns wound in one plane and in a first direction and furthermore having inter-turn spaces, and wherein the second spiral is wound in a second direction being identical to the first direction and furthermore forms in each case one turn inside a particular inter-turn space.

The first spiral and the second spiral of the booster antenna preferably form mutual inductors.

The first spiral is preferably associated with a first inductance and the second spiral is preferably associated with a second inductance. The second inductance is preferably higher than the first inductance. Additionally or alternatively, the first inductance is preferably positive and/or the second inductance is preferably negative.

That is, the first spiral preferably has a first normal or positive inductance such as 2 µH and the second spiral has a second higher inductance. For instance, the second inductance may be at least ten times greater in absolute value than the first inductance. For example the second inductance could be equal to -38 µH.

As mentioned earlier, the booster antenna preferably forms an antenna circuit. Hence, it is particularly preferred that the booster antenna is a radio-frequency antenna circuit comprising at least two spirals interlocking in each other and forming mutual inductors.

The second spiral is preferably equivalent to or confers a capacitance/capacitor value. For instance, if the second spiral is associated with a second inductance of -38 µH, the second spiral confers substantially the equivalent of a capacitance of 33 pF.

In order to at least partially arrange the second spiral between turns of the first spiral and to create capacitance, it is preferred that the booster antenna comprises at least one jump or bridge of at least one turn between the first and second spirals. Said at least one jump is preferably provided each time the second spiral meets an end portion of the first spiral in order to create a concentric design of the booster antenna.

The booster antenna and the module antenna are preferably inductively coupled to one another. That is, it is preferred that the booster antenna and the module antenna are not physically connected to one another. In other words, it is preferred that no capacitive coupling is established between the booster antenna and the module antenna.

The booster antenna preferably comprises a coupling area, and wherein said inductive coupling between the booster antenna and the module antenna is preferably established at the coupling area of the booster antenna.

The coupling area of the booster antenna is preferably formed within the first spiral and preferably corresponds to a further spiral with a plurality of further turns. Said further spiral is preferably formed in a region of the second end portion of the first spiral. In fact, it is particularly preferred that an innermost turn of the first spiral extends into the further spiral, and wherein an innermost turn of the further spiral extends into the second end portion of the first spiral that extends into the second spiral.

The coupling area is preferably arranged in view of the module antenna in order to enable an inductive connection with the module antenna. The coupling area preferably comprises four turns or more. The number of turns of the coupling area depends essentially from the size of module antenna, the number of turns and the resonance frequency of the module antenna.

A coupling surface of the booster antenna preferably extends over a surface area of the smart card that is approximately equal to or less than half the surface area of the data carrier. The coupling area of the booster antenna preferably defines the coupling surface of the booster antenna.

The data carrier preferably further comprises at least one additional light emitting device. The light emitting device and the additional light emitting device are preferably connected in series to one another. Alternatively, the light emitting device and the additional light emitting device are can be connected in parallel to one another. Additionally or alternatively, the additional light emitting device is preferably connected to the booster antenna, particularly preferably to the end portions of the booster antenna.

That is, the data carrier can comprise two or more light emitting devices. These two or more light emitting devices preferably correspond to an LED or OLED module as described earlier.

The two or more light emitting devices are particularly preferably connected to the first end portion of the first spiral as well as to the second end portion of the second spiral of the booster antenna.

Furthermore, in the event of the light emitting device being an OLED module the presence of a diode bridge being integrated or intercalated between its terminals and the booster antenna in order to have a DC Voltage alimentation and not AC in the event that it is not integrated.

An advantage associated with two or more light emitting devices results from the increased number of light emitting devices itself, since more or larger areas of the data carrier can be illuminated, for instance.

The data carrier preferably further comprises at least one carrier body, and wherein the electronic module and/or the booster antenna and/or the light emitting device are at least partially and preferably entirely arranged within the carrier body.

The carrier body preferably corresponds to a card body as it is commonly known in the card industry. That is, the carrier body preferably comprises one or more layers that are arranged above one another and which extend along an extension direction. Two or more layers of the carrier body are preferably connected to one another by means of lamination or the like. Furthermore, the layers preferably comprise or consist of at least one polymer and/or plastic and/or are transparent.

The electronic module and/or the booster antenna and/or the one or more light emitting devices are preferably at least partially and preferably entirely arranged within the card body.

To this end it is particularly preferred that the booster antenna is provided on a so-called insert or inlay as it is well-known in the card industry. In fact, the booster antenna is particularly preferably provided via wire that is embedding technology well-known in the art. Said inlay or insert is preferably inserted into the carrier body or card body during a hot lamination process thereof. Once laminated, the carrier body or card body is preferably milled on an electronic module area in order to receive the electronic module. The antenna coupling area is preferably located below or under this electronic module area when seen along the extension direction. The inlay or insert preferably comprise or consists of one or more polymers and/or plastics as the carrier body or card body does. Whereas the electronic module is preferably arranged in a milled cavity in the card body, the light emitting device such as the LED or OLED module can be arranged within a cavity provided in the inlay or insert or in the card body. The cavity for the light emitting device can likewise be produced by milling as it is known in the art. To this end the light emitting device(s) is preferably arranged so as to illuminate a top side and/or a bottom side of the data carrier, in particular of the card body.

The data carrier preferably further comprises at least one security element, and wherein the light emitting device is configured and/or arranged in order to illuminate the security element.

The security element preferably is an image and/or an alphanumeric character such as an image or name of the holder of the data carrier. Said security element can be provided in the form of a print, an embossing, debossing, an ablation, etc., as it is known in the field of the art.

The light emitting device is preferably arranged and/or configured such that it illuminates the security element during a communication between the booster antenna and the remote device.

In another aspect, a secure article comprising or consisting of at least one data carrier as described above is provided. The secure article preferably is a smart card, a passport, an electronic tag, a badge, a travel ticket or the like.

Any explanations made herein regarding the data carrier per se likewise apply to the secure article comprising or consisting of the data carrier and vice versa.

The secure article consisting of the data carrier means that the data carrier provides the secure article. For example, the data carrier can be a smart card. However, it is likewise conceivable that the data carrier forms part of a secure article. For instance, the data carrier can be an electronic tag that is embedded in a passport page of a secure article in the form of an e-passport. That is, the data carrier preferably is a form factor, particularly preferably a contactless form factor. To this end it is particularly preferred that the data carrier is an electronic tag compliant with ISO 14443.

In another aspect, a method of producing a data carrier, preferably a data carrier as described above, is provided. The method comprises the steps of i) providing at least one electronic module comprising at least one module antenna, ii) providing at least one booster antenna, and iii) providing at least one light emitting device. The electronic module is configured to communicate with a remote device being arranged remotely from the data carrier via the module antenna. The booster antenna is configured to communicate with the remote device in a wireless manner. The booster antenna is further configured to power the module antenna upon its communication with the remote device. The booster antenna is configured to power the light emitting device upon its communication with the remote device.

Any explanations made herein regarding the data carrier and the secure article comprising or consisting of the data carrier likewise apply to the method of producing the data carrier and vice versa.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows an exploded view of a data carrier comprising a carrier body that has an inlay and an electronic module to be arranged within the carrier body;
- Fig. 2: shows a top view of an inlay comprising a booster antenna and a light emitting device to be used in a data carrier according to figure 1.

### DESCRIPTION OF PREFERRED EMBODIMENTS

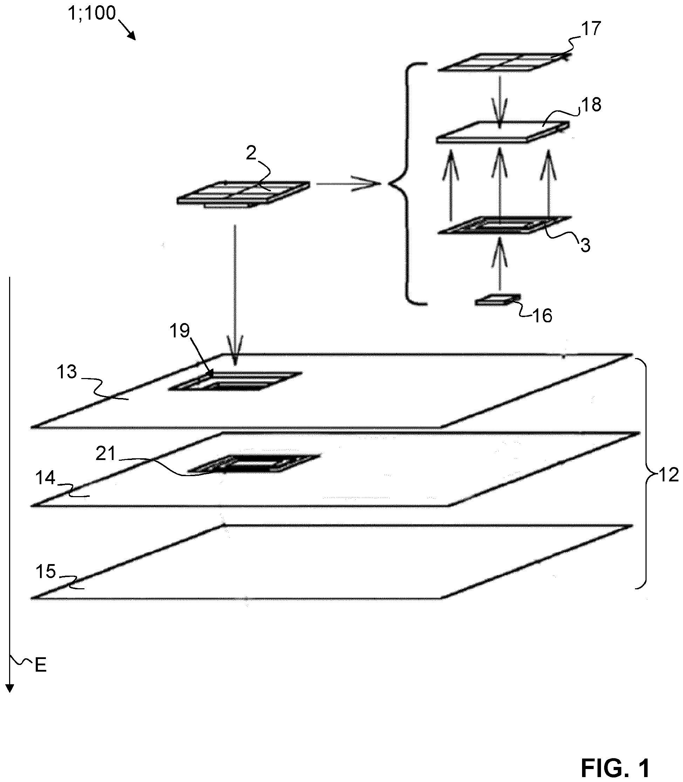

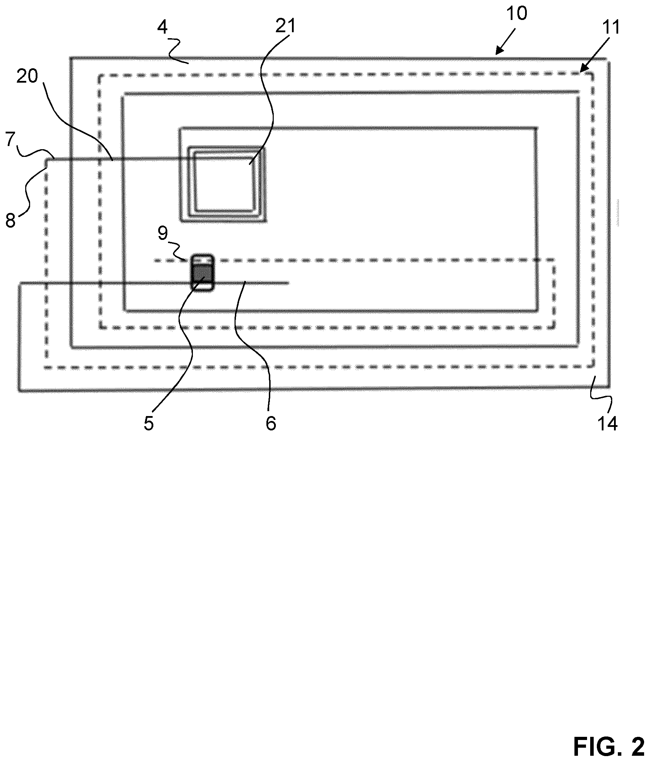

Figure 1 depicts a secure article 100 consisting of a data carrier 1 in the form of a smart card in a schematic manner. In particular, the data carrier 1 comprises a carrier body 12, wherein said carrier body 12 can also be referred to as card body of the smart card. The carrier body 12 comprises here three layers 13, 14, 15 that are arranged above one another when seen along an extension direction E. These layers 13, 14, 15 preferably consist of a transparent plastic. The layer 14 between the upper most layer 13 and the lowermost layer 15 is a so-called inlay. The inlay 14 and the uppermost and lowermost layers 13, 15 of the carrier body 12 are connected to one another via a hot lamination, for instance. Details of the inlay 14 will be discussed with reference to figure 2 that depicts an actual inlay 14 according to the invention and in particular a booster antenna 4 and a light emitting device 5. The inlay 14 of figure 1 is schematic and shall serve the purpose of illustrating a conceivable assembly of ca carrier body 12 of a data carrier 1.

As follows from figure 1, the data carrier 1 further comprises an electronic module 2 that has an antenna 3, herein referred to as module antenna 3, with tracks and loops for contactless protocol communication. The electronic module 2 furthermore comprises an internal microprocessor chip and contact pads 17 for contact protocol communication. These components are contained on a module substrate 18. Once laminated, a cavity 19 is milled into the carrier body 12 and the electronic module 2 is placed therein. The booster antenna 4 and the light emitting device 5 are thus entirely arranged within the card body 12.

As just mentioned, figure 2 depicts an embodiment of an inlay 14 according to the invention, wherein said inlay 14 comprises a booster antenna 4 as well as a light emitting device 5. It should be noted here that the booster antenna and the light emitting device could also be arranged elsewhere in the card body, for instance in the uppermost layer 13 or lowermost layer 15 of the card body. The electronic module 2 is configured to communicate with a remote device (not shown) being arranged remotely from the data carrier 1 via the module antenna 3. The booster antenna 4 is configured to communicate with the remote device in a wireless manner as well. Moreover, the booster antenna 4 is further configured to power the module antenna 3 upon its communication with the remote device, and wherein the booster antenna 4 powers the light emitting device 5 upon its communication with the remote device.

In the depicted example the light emitting device 5 corresponds to a LED module or to an OLED module that can emit light in different regions of the electromagnetic spectrum depending on the type of LED or OLED module.

The booster antenna 4 is made of a single wire and comprises here a first spiral 10 with a plurality of first turns and a second spiral 11 with a plurality of second turns, and wherein the second spiral 11 extends between the first turns of the first spiral 10. The first spiral 10 is indicated by means of a solid line and the second spiral 11 is indicated by means of a dashed line for better distinguishability.

Furthermore, the first spiral 10 and the second spiral 11 in each case comprises a first end portion 6, 8 and a second end portion 7, 9. The first end portion 6 or the beginning of the first spiral 10 is connected to the light emitting device 5. The second end portion 7 of the first spiral 10 is connected to the first end portion 8 of the second spiral 11. The second end portion 9 or the end of the second spiral 11 is connected to the light emitting device 5. That is, the booster antenna 4 is connected to the light emitting device 5, in particular via its end portions 6, 9.

In order to arrange the second spiral 11 between turns of the first spiral 10 and to create capacitance, the booster antenna 4 comprises jumps or bridges 20 of at least one turn between the first spiral 10 and the second spiral 11. In particular, a jump or bridge 20 is provided each time that the wire of the second spiral 11 meets an end 7 of the first spiral 10 in order to create a concentric design of the booster antenna 4.

The booster antenna 4 and the module antenna 3 are inductively coupled to one another. To this end, the booster antenna 4 comprises a coupling area 21, and wherein said inductive coupling between the booster antenna 4 and the module antenna 3 is established at the coupling area 21 of the booster antenna. As follows from figure 2, the coupling area 21 of the booster antenna 4 is formed within the first spiral 10 and corresponds to a further spiral with a plurality of further turns. Said further spiral is formed in a region of the second end portion 7 of the first spiral 10. When inserted into the carrier body 12, the module antenna 3 is placed and aligned below said coupling area 21.

**LIST OF REFERENCE SIGNS**

| | | | |
|---|---|---|---|
| 1 | data carrier | 10 | first spiral |
| 100 | secure article | 11 | second spiral |
| 2 | electronic module | 12 | carrier body |
| 3 | module antenna | 13 | layer |
| 4 | booster antenna | 14 | layer |
| 5 | light emitting device | 15 | layer |
| 6 | first end portion of first spiral | 16 | chip |
| 7 | second end portion of first spiral | 17 | contact pads |
| | | 18 | module substrate |
| 8 | first end portion of second spiral | 19 | cavity |
| | | 20 | jumps or bridges |
| 9 | second end portion of second spiral | 21 | coupling area |
| | | | |

## Claims

1. A data carrier (1) for a secure article (100) comprising:
- at least one electronic module (2) comprising at least one module antenna (3),
- at least one booster antenna (4), and
- at least one light emitting device (5),
wherein the electronic module (2) is configured to communicate with a remote device being arranged remotely from the data carrier (1) via the module antenna (3),
wherein the booster antenna (4) is configured to communicate with the remote device in a wireless manner,
wherein the booster antenna (4) is further configured to power the module antenna (3) upon its communication with the remote device,
**characterized in that** the booster antenna (4) is configured to power the light emitting device (5) upon its communication with the remote device.

2. The data carrier (1) according to claim 1, wherein the light emitting device (5) corresponds to a LED module or to an OLED module, and/or
wherein the light emitting device (5) is configured to emit light in the ultraviolet region and/or the visible region and/or the infrared region of the electromagnetic spectrum.

3. The data carrier (1) according to any one of the preceding claims, wherein the booster antenna (4) is connected to the light emitting device (5).

4. The data carrier (1) according to claim 3, wherein the booster antenna (4) comprises two end portions (6, 9), and wherein the booster antenna (4) is connected to the light emitting device (5) at the two end portions (6, 9).

5. The data carrier (1) according to any one of the preceding claims, wherein the booster antenna (4) comprises at least a first spiral (10) with a plurality of first turns and a second spiral (11) with a plurality of second turns, and
wherein the second spiral (11) extends between the first turns of the first spiral (10).

6. The data carrier (1) according to claim 5, wherein the first spiral (10) and the second spiral (11) in each case comprises a first end portion (6, 8) and a second end portion (7, 9), and wherein at least one of:
- the first end portion (6) of the first spiral (10) is connected to the light emitting device (5),
- the second end portion (7) of the first spiral (10) is connected to the first end portion (8) of the second spiral (11), and
- the second end portion (9) of the second spiral (11) is connected to the light emitting device (5).

7. The data carrier (1) according to claim 5 or 6, wherein the first turns are wound in a first direction and the second turns are wound in a second direction, and
wherein the first direction and the second direction equal one another.

8. The data carrier (1) according to any one of claims 5 to 7, wherein the first spiral (10) is associated with a first inductance and the second spiral (11) is associated with a second inductance, and
wherein the second inductance is higher than the first inductance, and/or
wherein the first inductance is positive and/or the second inductance is negative.

9. The data carrier (1) according to any one of the preceding claims, wherein the booster antenna (4) and the module antenna (3) are inductively coupled to one another.

10. The data carrier (1) according to any one of the preceding claims, wherein a coupling surface of the booster antenna (4) extends over a surface area of the smart card that is approximately equal to or less than half the surface area of the data carrier (1).

11. The data carrier (1) according to any one of the preceding claims, further comprising at least one additional light emitting device, and
wherein the light emitting device (5) and the additional light emitting device are connected in series to one another, and/or
wherein the additional light emitting device is connected to the booster antenna (4), preferably to the end portions of the booster antenna (4).

12. The data carrier (1) according to any one of the preceding claims, further comprising at least one carrier body (12), and wherein the electronic module (2) and/or the booster antenna (4) and/or the light emitting device (5) are at least partially and preferably entirely arranged within the carrier body.

13. The data carrier (1) according to any one of the preceding claims, further comprising at least one security element,
wherein the light emitting device (5) is configured and/or arranged in order to illuminate the security element.

14. A secure article (100) comprising or consisting of at least one data carrier (1) as claimed in any one of the preceding claims, wherein the secure article (100) is a smart card, a passport, an electronic tag, a badge, a travel ticket or the like.

15. A method of producing a data carrier (1), preferably a data carrier (1) as claimed in any one of the preceding claims, wherein the method comprises the steps of:
- Providing at least one electronic module (2) comprising at least one module antenna (3),
- Providing at least one booster antenna (4), and
- Providing at least one light emitting device (5),
wherein the electronic module (2) is configured to communicate with a remote device being arranged remotely from the data carrier (1) via the module antenna (3),
wherein the booster antenna (4) is configured to communicate with the remote device in a wireless manner,
wherein the booster antenna (4) is further configured to power the module antenna (3) upon its communication with the remote device,
**characterized in that** the booster antenna (4) is configured to power the light emitting device (5) upon its communication with the remote device.
